# EUROPEAN PATENT APPLICATION

(11) **EP 4 239 218 A1**
(43) Date of publication of application: **06.09.2023**
(21) Application number: 22160047.1
(22) Date of filing: 03.03.2022
(51) Int. Cl.: F16H 39/01, F16H 39/02

(54) **POWER TRANSMISSION DEVICE**

(62) Divisional of application: 22200603.3
(71) Applicant: FNF Innovation SH.P.K., Gjilan, Kosovo (AL)
(72) Inventor: FEHMI, Mustafa, Gjilan (AL)
(74) Representative: Kador & Partner Part mbB

(57) **Abstract**

The present invention relates to a power transmission device for continuous transmission of power comprising a pipe (12) which is filled with a fluid (14) and which comprises, at the first end of the pipe, a first cylinder (7) in fluid connection with the pipe in which a first piston (10) for continuous reciprocal longitudinal movement is provided, and, at the second end of the pipe, a second cylinder (7') also in fluid connection with the pipe in which a second piston (10') for continuous reciprocal longitudinal movement is provided, and to an according process.

## Description

The present invention relates to a power transmission device and to a method for continuous transmission of power using said device.

Known devices for the continuous transmission of power, for example of power produced by an engine, use mechanical transmitting means which, on the one hand, have the disadvantage that power losses occur through friction between the elements forming the transmitting means and that some or all of these mechanical parts have to be moved. One example of such mechanical transmitting means is a (bicycle) chain, consisting of links as the transmitting means elements. Furthermore, in particular when power has to be transmitting over larger distances this is either costly due to the nature of the transmitting means elements or not at all possible.

It is thus the object of the present invention to provide a device and a method for continuous power transmission, for example of an engine, which avoids or at least reduces the disadvantages of the prior art.

The present invention is based on the finding that this object can be achieved by using a fluid as power transmitting element.

Thus, the present invention provides a power transmission device for continuous transmission of power comprising a pipe (12) which is filled with a fluid (14) and which comprises, at the first end of the pipe, a first cylinder (7) in fluid connection with the pipe in which a first piston (10) for continuous reciprocal longitudinal movement is provided, and, at the second end of the pipe, a second cylinder (7') also in fluid connection with the pipe in which a second piston (10') for continuous reciprocal longitudinal movement is provided.

The device and the method according to the invention have the advantage that the power is transmitted by non-mechanical means, so that only small transmission losses occur during transmission, and, for example, losses due to friction between mechanical means is avoided. A further advantage is that by using a fluid for power transmission, the device can be easily adapted to the particular distance over which the power has to be transmitted and the device may also be used for power transmission over long distances in a simple and cost-effective manner. Still further, power transmission may be effected along any geometric form as the pipe may be formed in any geometrical way. For example, the pipe may be linear along the path of power transmission, but it may also be curved along said path or have curved sections.

The device may, for example, be used in vehicles of all kinds, such as cars, in wind power plants in container ships, etc.

The pipe (12) in the device of the invention is usually made of a stiff, form-stable material, such as metal or a suitable plastic material, such as a HDPE.

Usually, the pipe (12) has one or more inlets (15) for the fluid to be filled in.

The pistons (10, 10') in the cylinders (7, 7') translate reciprocally in longitudinal direction from a minimum to a maximum position within the cylinder. During power transmission the pistons (10, 10') are in continuous movement.

The power transmission through the device of the invention is effected by a power transmission to the outer surface of the first piston (10) so as to set the piston into said reciprocal longitudinal translation in the first cylinder (7), which causes a movement of the fluid (14) within the pipe (12) which, in turn, causes a reciprocal longitudinal translation of the second piston (10') within the second cylinder (7'), which may further be used to perform mechanical work.

The inner volume of the cylinder is defined by the inner walls of the cylinder and the inner surface of the piston. Hence, the inner cylinder volume is defined by the volume accessible to the fluid, and this inner volume varies with the movement of the piston from a minimum to a maximum value.

The movement of the pistons (10, 10') is restricted so that they can only move within the respective cylinder (7, 7'). This may, e.g., be done by restricting means at the outer end of the cylinder or by attaching means to the outer surface of the piston which allow only such movement, such as connecting rods further connected to power generating/consuming machines.

The cross section of one or both of the cylinders inner volume usually is larger than the inner cross section of pipe, with both such inner cross sections being defined to be perpendicular to the direction of fluid movement.

The first (7) and second cylinder (7') may have same of different dimensions, such cross section or length.

In a preferred embodiment, the first (7) and second cylinder (7') are dimensioned so that the piston stroke, i.e. the distance between maximum and minimum position of the piston within the respective cylinder, of both the first (10) and the second piston (10') is the same.

The first (10) and second pistons (10') are dimensioned and designed so that a tight seal of the inner cylinder volume is obtained, thus avoiding a leakage of the fluid from the device.

Preferably, the piston (10, 10') of one, or more preferably both, of the cylinders (7, 7') is provided with sealing means (8). The sealing means further ensure that no fluid leakage occurs.

Preferably, the sealing means is/are one or more compression rings (8).

In one embodiment of the present invention, the fluid (14) used as a transmitting means for power is a gas, preferably a compressed gas.

As a gas, for example air or nitrogen may be used.

Preferably, the pressure of the gas is from 2 to 200 bar, preferably from 3 to 50 bar, further preferred from 5 to 25 bar.

In this embodiment of the invention, the device preferably further comprises a rope or cable (13) provided inside of the pipe (12) which connects the inner surfaces of the first and the second piston (10, 10'). The rope (13) is preferably connected to the center (11, 11') of one or both of the inner surfaces of the pistons (10, 10').

The connection is usually made in such a way that the rope (13) is in tightened condition when one piston (10) is in maximum and the other piston (10') is in minimum position within their respective cylinders (7, 7').

Such a cable or rope (13) can, for example, be made of metal or a synthetic material such as nylon.

In a second embodiment of the present invention, the fluid (14) used as a transmitting means for power is a liquid, i.e. a dense fluid.

For example, such a liquid may be an oil, e.g. a mineral oil.

In this embodiment of the invention the inner volume of the pipe (12) and the inner volume of the cylinders (7, 7') is fully filled with fluid (14). As the distance of the first (10) and second piston (10') is fully controlled by the liquid no rope or cable within the pipe is necessary.

Furthermore, as liquids are almost not compressible at all, this embodiment of the device of the invention is particularly well suited for power transmission over long distances, such as in the order of kilometers.

In the device of the invention, the outer surface of the first piston (10) may be provided with means (2, 3, 4, 5, 6) for connection with a power generating machine.

For example, the center of the outer surface (9) of the first piston (7) may be provided with a connecting rod (6) which is further connected (5) to a crankshaft (4), that is rotatably mounted on two bearings (3). The axle (2) of the crankshaft (4) is connected to a rotating part (1) of a motor or driven by a motor, such as a diesel or electric motor.

Upon continuous power generated by the motor the pistons (10, 10') are caused to reciprocally translate in longitudinal direction from a maximum position allowing a maximum of the inner volume of the respective cylinder (7, 7')) to a minimum position in which the inner volume of the respective cylinder is minimized, thus transmitting the power through the device of the invention.

In an embodiment, the device of the invention comprises a power generating machine connected to the outer surface of the first piston (10), which in action provides continuous power to be transmitted.

The power generating machine may be connected to or comprises a rotatable wheel (1) which provides power to be transmitted by continuous rotational movement.

Preferably, the outer surface of the second piston (10') is provided with a means for connection (14) with a power consuming machine (15).

For example, the center of the outer surface (9') of the second piston (10') may be provided with a connecting rod (6') which is mounted on a bearing (5') so that it may move in a circular movement (17) as to rotate a drive shaft (16) of a power consuming machine.

In an embodiment, the device of the invention comprises a power consuming machine (15) connected to the outer surface of the first piston (10'), which can be set into action by the continuous power transmitted.

The present invention further relates to a method for continuous transmission of power in which a fluid is used as a power transmitting means, preferably using a device according to any one of the embodiments described herein.

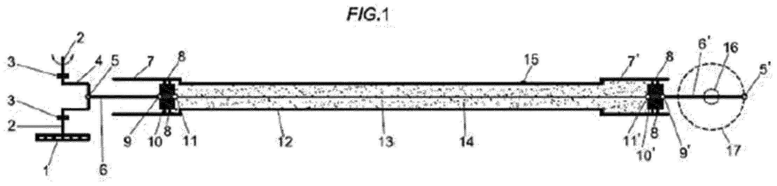

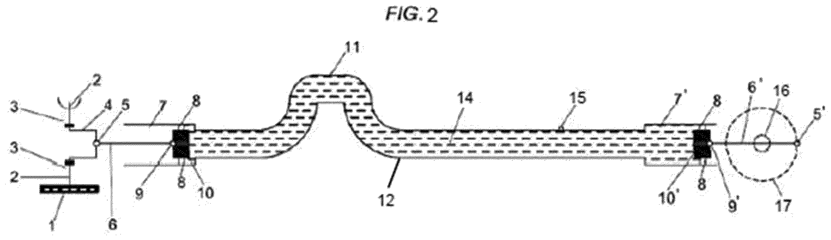

Embodiments of the power transmission device according to the invention are further described below with reference to Figs. 1 and 2, wherein:
Fig. 1 shows a first embodiment of the device of the invention using a compressed gas as power transmitting means.
Fig. 2 shows a second embodiment of the device of the invention using a fluid as power transmitting means.

The device shown in Fig. 1 comprises a pipe (12) which is provided with a first (7) and a second cylinder (7') at its first and second end, respectively.

The inner volume of the cylinders (7, 7') is in fluid connection with the inner volume of the pipe (12), and the pipe (12) connects both cylinders (7, 7') in straight, non-curved manner. Inside each of the cylinders (7, 7') a piston (10, 10') is provided which can reciprocally translate in longitudinal direction from a maximum position allowing a maximum of the inner volume of the respective cylinder (7, 7')) to a minimum position in which the inner volume of the respective cylinder is minimized. The pistons (10, 10') are equipped with compression rings (8) as sealing means.

The inner volume of the pipe (12) and the cylinders (7, 7') is filled with compressed gas (14), which can be introduced into the pipe (12) by inlet (15). The compressed gas (14) can have a pressure of e.g. 10 bar. Inside the pipe (12) there is furthermore provided a rope (13) which is connected, on the one hand, to the center of the inner surface (11) of the first piston (7), and, on the other hand, to the center of the inner surface (11') of the second piston (7'). The rope is provided in order to maintain the distance between both pistons (10, 10') constant upon movement of the first piston (10) from a minimum to a maximum position within the first cylinder (7).

The center of the outer surface (9) of the first piston (7) is provided with a connecting rod (6) which is further connected (5) to a crankshaft (4), which is rotatably mounted on two bearings (3). The axle (2) of the crankshaft (4) is connected to a rotating part (1) of a motor or driven by a motor.

The center of the outer surface (9') of the second piston (10') is provided with a connecting rod (6') which is mounted on a bearing (5') so that it may move in a circular movement (17) as to rotate a drive shaft (16) of a power consuming machine.

Upon movement of rotating part (1), the piston (10) in the first cylinder (7) is set into continuous reciprocating longitudinal movement within the cylinder (7), thereby effecting a movement of the compressed gas within the pipe (12) which, in turn, causes a continuous reciprocating longitudinal movement of the piston (10') in the second cylinder (7') so that drive shaft (16) is set into rotational movement.

The device shown in Fig. 2 comprises a pipe (12) which is provided with a first (7) and a second cylinder (7') at its first and second end, respectively.

The inner volume of the cylinders (7, 7') is in fluid connection with the inner volume of the pipe (12). The pipe (12), which connects both cylinders (7, 7'), has straight sections and also a curved section (11).

Inside each of the cylinders (7, 7') a piston (10, 10') is provided which can reciprocally translate in longitudinal direction from a maximum position allowing a maximum of the inner volume of the respective cylinder (7, 7')) to a minimum position in which the inner volume of the respective cylinder is minimized. The pistons (10, 10') are equipped with compression rings (8) as sealing means.

The inner volume of the pipe (12) and the cylinders (7, 7') is filled with a liquid (14), such as a mineral oil, which can be introduced into the pipe (12) by inlet (15).

The center of the outer surface (9) of the first piston (7) is provided with a connecting rod (6) which is further connected (5) to a crankshaft (4), which is rotatably mounted on two bearings (3). The axle (2) of the crankshaft (4) is connected to a rotating part (1) of a motor or driven by a motor.

The center of the outer surface (9') of the second piston (10') is provided with a connecting rod (6') which is mounted on a bearing (5') so that it may move in a circular movement (17) as to rotate a drive shaft (16) of a power consuming machine.

Upon movement of rotating part (1), the piston (10) in the first cylinder (7) is set into continuous reciprocating longitudinal movement within the cylinder (7), thereby effecting a movement of the liquid within the pipe (12) which, in turn, causes a continuous reciprocating longitudinal movement of the piston (10') in the second cylinder (7') so that drive shaft (16) is set into rotational movement.

## Claims

1. A power transmission device for continuous transmission of power comprising a pipe (12) which is filled with a fluid (14) and which comprises, at the first end of the pipe, a first cylinder (7) in fluid connection with the pipe in which a first piston (10) for continuous reciprocal longitudinal movement is provided, and, at the second end of the pipe, a second cylinder (7') also in fluid connection with the pipe in which a second piston (10') for continuous reciprocal longitudinal movement is provided.

2. Power transmission device according to claim 1 wherein the piston (10, 10') of one, or preferably both, of the cylinders is provided with sealing means.

3. Power transmission device according to claim 2 wherein the sealing means is one or more compression rings (8, 8').

4. Power transmission device according to any one of the preceding claims wherein the fluid is a gas, preferably a compressed gas.

5. Power transmission device according to claim 4 wherein the device further comprises a rope or cable (13) provided inside of the pipe (12) which connects the inner surfaces of the first and the second piston (10, 10').

6. Power transmission device according to claims 4 or 5 wherein the pressure of the gas is from 2 to 200 bar, preferably from 3 to 50 bar, further preferred from 5 to 25 bar.

7. Power transmission device according to any one of claims 1 to 3 wherein the fluid is a liquid, such as an oil.

8. Power transmission device according to any one of the preceding claims wherein the outer surface of the first piston (10) is provided with a means (2, 3, 4, 5, 6) for connection with a power generating machine (1).

9. Power transmission device according to claim 8 comprising a power generating machine (1) connected to the outer surface of the first piston (10).

10. Power transmission device according to any one of the preceding claims wherein the outer surface of the second piston (10') is provided with a means for connection (14) with a power consuming machine (15).

11. Power transmission device according to claim 10 comprising a power consuming machine (15) connected to the outer surface of the first piston (10').

12. A method for continuous transmission of power in which a fluid is used as a power transmitting means, preferably using a device according to any one of the preceding claims.

## Amended claims

### Amended claims in accordance with Rule 137(2) EPC.

1. A power transmission device for continuous transmission of power comprising a pipe (12) which is filled with a gas (14), preferably a compressed gas, and which comprises, at the first end of the pipe, a first cylinder (7) in fluid connection with the pipe in which a first piston (10) for continuous reciprocal longitudinal movement is provided, and, at the second end of the pipe, a second cylinder (7') also in fluid connection with the pipe in which a second piston (10') for continuous reciprocal longitudinal movement is provided wherein the first (10) and second pistons (10') are dimensioned and designed so that a tight seal of the inner cylinder volumes is obtained, thus avoiding a leakage of the gas from the device.

2. Power transmission device according to claim 1 wherein the piston (10, 10') of one, or preferably both, of the cylinders is provided with sealing means.

3. Power transmission device according to claim 2 wherein the sealing means is one or more compression rings (8, 8').

4. Power transmission device according to any one of claims 1 to 3 wherein the device further comprises a rope or cable (13) provided inside of the pipe (12) which connects the inner surfaces of the first and the second piston (10, 10').

5. Power transmission device according to any one of the preceding claims wherein the pressure of the gas is from 2 to 200 bar, preferably from 3 to 50 bar, further preferred from 5 to 25 bar.

6. Power transmission device according to any one of the preceding claims wherein the outer surface of the first piston (10) is provided with a means (2, 3, 4, 5, 6) for connection with a power generating machine (1).

7. Power transmission device according to claim 6 comprising a power generating machine (1) connected to the outer surface of the first piston (10).

8. Power transmission device according to any one of the preceding claims wherein the outer surface of the second piston (10') is provided with a means for connection (14) with a power consuming machine (15).

9. Power transmission device according to claim 8 comprising a power consuming machine (15) connected to the outer surface of the first piston (10').

10. A method for continuous transmission of power in which a gas is used as a power transmitting means using a device according to any one of the preceding claims.
